# EUROPÄISCHE PATENTSCHRIFT

(11) **EP 2 346 639 B1**
(45) Veröffentlichungstag und Bekanntmachung des Hinweises auf die Patenterteilung: **29.03.2017**
(21) Anmeldenummer: 10779678.1
(22) Anmeldetag: 02.10.2010
(51) Int. Cl.: B23K 15/00, B23K 20/02, B23K 26/32, B23K 28/02

(54) **FÜGEVERFAHREN**
BONDING METHOD
PROCÉDÉ D'ASSEMBLAGE

(30) Priorität: 08.10.2009 DE 102009048632
(43) Veröffentlichungstag der Anmeldung: 27.07.2011
(73) Patentinhaber: MTU Aero Engines AG, 80995 München (DE)
(72) Erfinder: RICHTER, Karl-Hermann, 85229 Markt Indersdorf (DE); BAMBERG, Joachim, 85221 Dachau (DE)
(86) Internationale Anmeldenummer: PCT/DE2010/001169
(87) Internationale Veröffentlichungsnummer: WO 2011/042007

(56) Entgegenhaltungen:
- DE-A1-102007 050 142
- US-A1- 2005 139 581
- US-A1- 2006 086 776
- US-A1- 2006 138 093

## Beschreibung

Die Erfindung betrifft ein Fügeverfahren, nämlich ein Verfahren zum Verbinden einer Gasturbinenschaufel oder eines Gasturbinenschaufelsegments oder eines Gasturbinenschaufelkranzes, aus einem nicht schmelzschweißgeeigneten Werkstoff mit einem Adapter aus einem schmelzschweißgeeigneten Werkstoff nach dem Oberbegriff des Anspruchs (siehe die Druckschrift DE-A.102007050142).

Moderne Gasturbinen, insbesondere Flugtriebwerke, müssen höchsten Ansprüchen im Hinblick auf Zuverlässigkeit, Gewicht, Leistung, Wirtschaftlichkeit und Lebensdauer gerecht werden. In den letzten Jahrzehnten wurden insbesondere auf dem zivilen Sektor Flugtriebwerke entwickelt, die den obigen Anforderungen voll gerecht werden und ein hohes Maß an technischer Perfektion erreicht haben. Bei der Entwicklung von Gasturbinen, insbesondere von Flugtriebwerken, spielt unter anderem die Werkstoffauswahl, die Suche nach neuen, geeigneten Werkstoffen sowie die Suche nach neuen Fertigungsverfahren eine entscheidende Rolle.

Die wichtigsten, heutzutage für Flugtriebwerke oder sonstige Gasturbinen verwendeten Werkstoffe sind Titanlegierungen, Nickellegierungen und hochfeste Stähle. Die hochfesten Stähle werden für Wellenteile, Getriebeteile, Verdichtergehäuse und Turbinengehäuse verwendet. Titanlegierungen werden typische Werkstoffe für Verdichterteile verwendet. Nickellegierungen sind für die heißen Teile wie Turbinenteile des Flugtriebwerks geeignet.

Als Fertigungsverfahren für Gasturbinenbauteile aus Titanlegierungen, Nickellegierung oder sonstigen Legierungen sind aus dem Stand der Technik in erster Linie das Feingießen sowie Schmieden bekannt. Alle hochbeanspruchten Gasturbinenbauteile, wie zum Beispiel die Schaufeln für einen Verdichter, sind Schmiedeteile. Laufschaufeln und Leitschaufeln der Turbine werden hingegen in der Regel als Feingussteile ausgeführt.

Zur Steigerung des Wirkungsgrads von Gasturbinen werden die Rotoren derselben zunehmend als integral beschaufelte Rotoren ausgeführt. Integral beschaufelte Rotoren werden auch als Blisk (bladed disk) oder Bling (bladed ring) bezeichnet, und zwar abhängig davon, ob ein scheibenförmiger Rotorgrundkörper oder ein ringförmiger Rotorgrundkörper vorliegt.

Bei der Herstellung von zum Beispiel Gasturbinenrotoren ist es erforderlich, Laufschaufeln des herzustellenden Gasturbinenrotors an einen Rotorgrundkörper zu fügen, also die Laufschaufeln mit dem Rotorgrundkörper zu verbinden. Als Fügeverfahren kommen dabei vorzugsweise Schweißverfahren zum Einsatz, wie zum Beispiel lineares Reibschweißen. Das Fügen einer Gasturbinenschaufel an einen Rotorgrundkörper mithilfe von linearen Reibschweißen erfordert eine aufwendige Nachbearbeitung und verursacht daher hohe Herstellkosten.

Hiervon ausgehend liegt der vorliegenden Erfindung das Problem zu Grunde, ein neuartiges Verfahren zum Verbinden eines ersten Bauteils, insbesondere einer Gasturbinenschaufel oder eines Gasturbinenschaufelsegments oder eines Gasturbinenschaufelkranzes, aus einem nicht schmelzschweißgeeigneten Werkstoff mit einem zweiten Bauteil, insbesondere einem Adapter aus einem schmelzschweißgeeigneten Werkstoff oder einem Rotorgrundkörper aus einem nicht schmelzschweißgeeigneten oder schmelzschweißgeeigneten Werkstoff, vorzuschlagen.

Dieses Problem wird durch ein Verfahren gemäß Anspruch 1 gelöst. Erfindungsgemäß wird in einem ersten Schritt das erste Bauteil mit dem zweiten Bauteil unter Ausbildung mindestens einer gasdichten Schweißnaht durch Schmelzschweißen verbunden, wobei anschließend in einem zweiten Schritt der Verbund aus dem ersten Bauteil und dem zweiten Bauteil einem Diffusionsschweißen durch heißisostatisches Pressen unterzogen wird.

Mit dem erfindungsgemäßen Verfahren wird erstmals vorgeschlagen, Bauteile, von denen mindestens eines aus einem nicht schmelzschweißgeeigneten Werkstoff gefertigt ist, in einem ersten Schritt durch Schmelzschweißen unter Ausbildung mindestens einer gasdichten Schweißnaht zu verbinden, und anschließend in einem zweiten Schritt den so hergestellten Verbund einem Diffusionsschweißen durch heißisostatisches Pressen zu unterziehen.

Durch Diffusionsvorgänge beim heißisostatischen Pressen entsteht ein perfekte, flächige Verbindung zwischen den zu verbindenden Bauteilen, wobei beim vorherigen Schmelzschweißen entstandene Risse zum Verschwinden gebracht und damit ausgeheilt werden.

Dabei ist von Bedeutung, dass die beim Schmelzschweißen ausgebildete Schweißnaht zwischen den zu verbindenden, aus einem nicht schmelzschweißgeeigneten Werkstoff hergestellten Bauteilen gasdicht ist, insbesondere außen umlaufend entlang der Schweißnaht.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

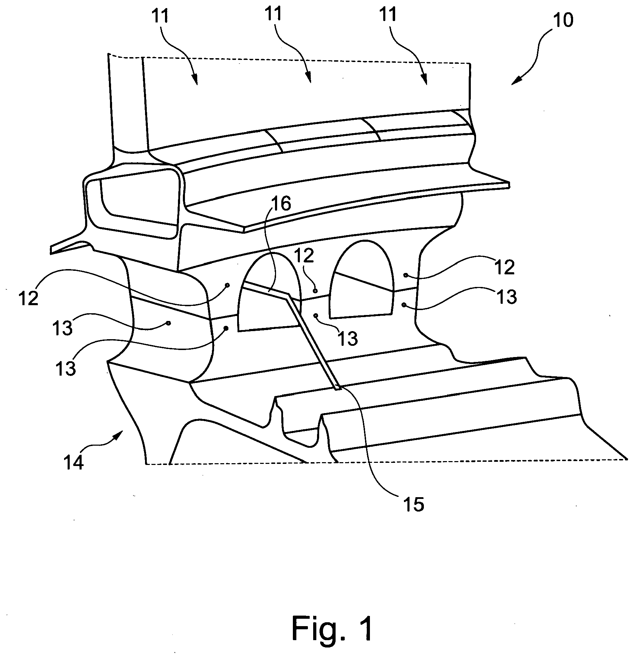

Fig. 1 eine schematisierte Darstellung zur Verdeutlichung des erfindungsgemäßen Fitgeverfahrens, nämlich des erfindungsgemäßen Verfahrens zum Verbinden eines ersten Bauteils, insbesondere einer Gasturbinenschaufel oder eines Gasturbinenschaufelsegments oder eines Gasturbinenschaufelkranzes, aus einem nicht schmelzschweißgeeigneten Werkstoff mit einem zweiten Bauteil, insbesondere einem Adapter aus einem schmelzschweißgeeigneten Werkstoff oder einem Rotorgrundkörper aus einem nicht schmelzschweißgeeigneten oder schmelzschweißgeeigneten Werkstoff.

Die hier vorliegende Erfindung wird betrifft ein Verfahren zum einer Gasturbinenschaufel oder eines Gasturbinenschaufelsegments oder eines Gasturbinenschaufelkranzes, aus einem nicht schmelzschweißgeeigneten Werkstoff mit einem Adapter aus einem schmelzschweißgeeigneten Werkstoff.

Mindestens eines der zu verbindenden Bauteile ist demnach aus einem nicht schmelzschweißgeeigneten Werkstoff gefertigt.

Eine Gasturbinenschaufel umfasst einen Schaufelfuß. Ein Gasturbinenschaufelsegment und ein Gasturbinenschaufelkranz umfassen mehrere Gasturbinenschaufeln und damit mehrere Schaufelfüße. Bei den Adaptern, mit welchen Schaufelfüße von Gasturbinenschaufeln im Sinne der hier vorliegenden Erfindung zu verbinden sind, kann es sich um separate Bauteile oder um integrale Bestandteile eines Rotorgrundkörpers handeln.

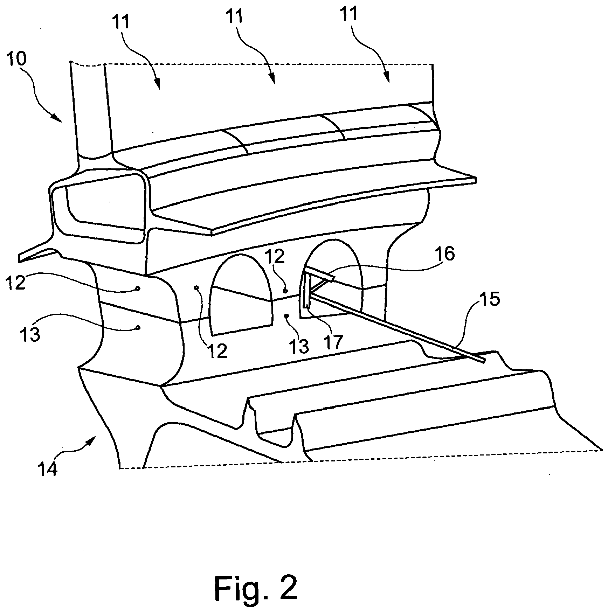

Nachfolgend wird die Erfindung unter Bezugnahme auf Fig. 1 und 2 im Detail beschrieben, wobei Fig. 1 und 2 jeweils einen Ausschnitt aus einem Gasturbinenschaufelsegment 10 mit drei Gasturbinenschaufeln 11 zeigen. Jede Gasturbinenschaufel 11 des Gasturbinenschaufelsegments 10 verfügt über jeweils einen Schaufelfuß 12. Jeder Schaufelfuß 12 des Gasturbinenschaufelsegments 10 ist mit jeweils einem Adapter 13 im Sinne des erfindungsgemäßen Verfahrens zu verbinden, wobei im gezeigten Ausführungsbeispiel die Adapter 13 integraler Bestandteil eines Rotorgrundkörpers 14 sind.

Das Gasturbinenschaufelsegment bzw. die Gasturbinenschaufeln 11 desselben sind aus einem nicht schmelzschweißgeeigneten Werkstoff gefertigt, so zum Beispiel aus einem polykristallinen oder einkristallinen oder gerichtet erstarrten Gusswerkstoff aus einer Nickelbasislegierung wie zum Beispiel aus LEK 94.

Die Adapter 13 sind aus einem schmelzschweißgeeigneten Werkstoff gefertigt, so zum Beispiel aus einem Schmiedewerkstoff aus einer Nickelbasislegierung wie zum Beispiel aus IN 718.

Zum Verbinden des Gasturbinenschaufelsegments 10 mit dem Rotorgrundkörper 14 wird so vorgegangen, dass in einem ersten Schritt die Schaufelfüße 12 der Gasturbinenschaufeln 11 des Gasturbinenschaufelsegments 10 mit jeweils einem Adapter 13 des Rotorgrundkörpers 14 jeweils unter Ausbildung einer gasdichten Schweißnaht durch Schmelzschweißen verbunden werden. Das Schmelzschweißen kann dabei als Laserstrahl-Schmelzschweißen oder Elektronenstrahl-Schmelzschweißen ausgeführt werden.

Es ist von Bedeutung, dass die hierbei ausgebildeten Schweißnähte gasdicht sind, nämlich über die gesamte Erstreckung derselben zwischen den Schaufelfüßen 12 und den Adaptern 13.

Das Schmelzschweißen wird vorzugsweise mit einer relativen geringen Streckenenergie von maximal 15 kJ/m, vorzugsweise von maximal 10 kJ/m, durchgeführt. Vorzugsweise beträgt die Streckenenergie beim Schmelzschweißen in etwa 6 kJ/m. Bei der Streckenenergie handelt es sich um das Verhältnis aus Leistung des Lasterstrahls bzw. Elektronenstrahl und der Vorschubgeschwindigkeit des Laserstrahls bzw. Elektronenstrahls.

Im Anschluss an das Ausbilden der gasdichten Schweißnähte zwischen den Schaufelfüßen 12 und den Adaptern 13 wird der so gebildete Verbund aus dem Gasturbinenschaüfelsegment 10 und dem Rotorgrundkörper 14 einem Diffusionsschweißen durch heißisostatisches Pressen (HIPPEN) unterzogen.

Bedingt durch die sich beim heißisostatischen Pressen ausbildenden Diffusionsvorgänge entsteht dann eine perfekte, flächige Verbindung zwischen den Schaufelfüßen 12 und den Adaptern 13. Beim Schmelzschweißen entstandene Risse werden zum Verschwinden gebracht und somit ausgeheilt. Daher ist nachfolgend keine Nachbearbeitung mehr erforderlich.

Das heißisostatische Pressen wird vorzugsweise bei einer Temperatur zwischen 900°C und 1000°C, bei einem Druck zwischen 1000 bar und 5000 bar für eine Zeitspanne zwischen 30 min und 300 min durchgeführt.

Wie Fig. 1 entnommen werden kann, ist zwischen benachbarten Schaufelfüßen 12 der Gasturbinenschaufeln 11 des Gasturbinenschaufelsegments 10 jeweils eine Ausnehmung ausgebildet, sodass benachbarte Schaufelfüße in Umfangsrichtung des Gasturbinenschaufelsegments 10 voneinander beabstandet sind, und sodass im Bereich jedes Schaufelfußes 12 zwischen demselben und dem jeweiligen Adapter 13 eine umlaufende, gasdichte Schweißnaht ausgebildet werden kann.

Aufgrund des hierbei zur Verfügung stehenden, beengten Bauraums wird ein Laserstrahl bzw. ein Elektronenstrahl 15 zur Ausbildung einer Schweißnaht 16 in einem relativ flachen Auftreffwinkel von zum Beispiel 15° auf die Oberfläche im Verbindungsbereich zwischen Schaufelfuß 12 und Adapter 13 gerichtet.

Um einen größeren Auftreffwinkel des Laserstrahls bzw. Elektronenstrahls 15 zur Ausbildung der Schweißnaht 16 zu gewährleisten, kann über einen miniaturisierten Bearbeitungskopf 17, der zwischen benachbarte Schaufelfüße 12 bzw. Adapter 13 eingeführt wird, eine Umlenkung bzw. Ablenkung des Laserstrahls 15 realisiert werden. Hierbei handelt es sich dann vorzugsweise um eine Umlenkung bzw. Ablenkung des Laserstrahls bzw. Elektronenstrahls 15 um 90°.

Im Unterschied zu den in Fig. 1 und 2 gezeigten Ausführungsbeispielen können auch einzelne Gasturbinenschaufeln mit ihren Schaufelfüßen an einen Adapter mit dem erfindungsgemäßen Verfahren gefügt werden. Ebenso ist es möglich, einen geschlossenen Gasturbinenschaufelkranz aus mehreren Gasturbinenschaufeln mit den Schaufelfüßen derselben an entsprechende Adapter zu fügen. Vorzugsweise sind die Adapter, an welche die Schaufelfüße der Gasturbinenschaufeln mithilfe des erfindungsgemäßen Verfahrens gefügt werden, als integraler Bestandteil eines Gasturbinenrotors ausgeführt. Die Adapter können jedoch als separate Bauteile ausgeführt sein. Bei den Gasturbinenschaufeln handelt es sich vorzugsweise um Laufschaufeln einer Turbine einer Gasturbine.

Da beim erfindungsgemäßen Fügeverfahren auf eine Nachbearbeitung verzichtet werden kann, können endkonturgenaue Gasturbinenschaufeln und Adapter verwendet werden.

## Patentansprüche

1. Verfahren zum Verbinden einer Gasturbinenschaufel oder eines Gasturbinenschaufelsegments oder eines Gasturbinenschaufelkranzes aus einem nicht schmelzschweißgeeigneten Werkstoff mit einem Adapter aus einem schmelzschweißgeeigneten Werkstoff, **dadurch gekennzeichnet, dass** es die folgenden Schritte umfasst:
Bereitstellen eines Rotorgrundkörpers, an dem jeweilige Adapter integral ausgebildet sind,
Verbinden vom einem Schaufelfuß der Gasturbinenschaufel oder von Schaufelfüßen (12) des Gasturbinensegments (10) oder von Schaufelfüßen des Gasturbinenschaufelkranzes mit einem jeweiligen Adapter unter Ausbildung einer um den betreffenden Schaufelfuß umlaufenden gasdichten Schweißnaht durch Schmelzschweißen, wobei eine Streckenenergie beim Schmelzschweißen maximal 15 kJ/m beträgt, und
Diffusionsschweißen durch heißisostatisches Pressendes Verbundes aus dem Schaufelfuß der Gasturbinenschaufel oder aus den Schaufelfüße (12) des Gasturbinensegments (10) oder aus den Schaufelfüßen des Gasturbinenschaufelkranzes mit dem jeweiligen Adapter.

2. Verfahren nach Anspruch 1,
**dadurch gekennzeichnet, dass**
das Schmelzschweißen durch Laserstrahl-Schmelzschweißen ausgeführt wird.

3. Verfahren nach Anspruch 1,
**dadurch gekennzeichnet, dass**
das Schmelzschweißen durch Elektronenstrahl-Schmelzschweißen ausgeführt wird.

4. Verfahren nach Anspruch 1, **dadurch gekennzeichnet, dass** die Streckenenergie beim Schmelzschweißen maximal 10 kJ/m beträgt.

5. Verfahren nach einem der Ansprüche 1 bis 4, **dadurch gekennzeichnet, dass** das heißisostatische Pressen bei einer Temperatur zwischen 900°C und 1000°C und einem Druck zwischen 1000 bar und 5000 bar für eine Zeitdauer zwischen 30 min und 300 min durchgeführt wird.

6. Verfahren nach Anspruch einem der vorhergehenden Ansprüche,
**dadurch gekennzeichnet, dass**
die Gasturbinenschaufel als Laufschaufel oder das Gasturbinenschaufelsegment als Laufschaufelsegment oder der Gasturbinenschaufelkranz als Laufschaufelkranz einer Turbine ausgebildet ist.

7. Verfahren nach einem der vorhergehenden Ansprüche, **dadurch gekennzeichnet, dass** beim Schmelzschweißen und beim Diffusionsschweißen endkonturgenaue Gasturbinenschaufeln und Adapter verwendet werden.

## Claims

1. A method for connecting a gas turbine blade or a gas turbine blade segment or a gas turbine blade ring consisting of a material that is not suitable for fusion welding to an adapter consisting of a material that is suitable for fusion welding, **characterized in that** the method comprises the hollowing steps:
providing a rotor body, on which respective adapters are integrally formed,
connecting a blade root of the gas turbine blade or blade roots (12) of the gas turbine segment (10) or blade roots of the gas turbine blade ring with a respective adapter to form a gas-tight weld seam surrounding the particular blade root by means of fusion welding,
wherein the energy input per unit length during fusion welding is a maximum of 15 kJ/m,
and
diffusion welding by hot isostatic pressing of the composite of the blade root of the gas turbine blade or of the blade roots (12) of the gas turbine segment (10) or of the blade roots of the gas turbine blade ring and the respective adapter.

2. The method according to claim 1, **characterized in that** the fusion welding is performed by means of laser beam fusion welding.

3. The method according to claim 1, **characterized in that** the fusion welding is performed by means of electron beam fusion welding.

4. The method according to claim 1, **characterized in that** the energy input per unit length during fusion welding is a maximum of 10 kJ/m.

5. The method according to one of claims 1 to 4, **characterized in that** the hot isostatic pressing is carried out at a temperature between 900°C and 1000°C and a pressure between 1000 bar and 5000 bar for a duration between 30 min and 300 min.

6. The method according to one of the preceding claims, **characterized in that** the gas turbine blade is configured as a rotor blade or the gas turbine blade segment is configured as a rotor blade segment or the gas turbine blade ring is configured as a rotor blade ring of a turbine.

7. The method according to one of the preceding claims, **characterized in that** net shape gas turbine blades and adapters are used for fusion welding and diffusion bonding.

## Revendications

1. Procédé d'assemblage d'une pale de turbine à gaz ou d'un segment de pale de turbine à gaz ou d'une couronne de pales de turbine à gaz constitué(e) d'un matériau ne convenant pas à un thermosoudage avec un adaptateur formé d'un matériau convenant à un thermosoudage, **caractérisé en ce qu'**il comprend les étapes suivantes consistant à :
fournir un corps de base rotorique, sur lequel des adaptateurs respectifs sont conçus d'un seul tenant,
assembler une emplanture de la pale de turbine à gaz ou des emplantures de pales (12) du segment de turbine à gaz (10) ou des emplantures de pales de la couronne de pales de turbine à gaz à un adaptateur respectif en formant un cordon de soudure étanche aux gaz entourant l'emplanture de pale concernée par thermosoudage, dans lequel une énergie d'arc atteint au maximum 15 kJ/m lors du thermosoudage, et
souder par diffusion par liaison à compression isostatique à température élevée l'emplanture de la pale de turbine à gaz ou les emplantures de pales (12) du segment de turbine à gaz (10) ou des emplantures de pales de la couronne de pales de turbine à gaz à l'adaptateur respectif.

2. Procédé selon la revendication 1,
**caractérisé en ce que** :
le thermosoudage est effectué par thermosoudage à rayon laser.

3. Procédé selon la revendication 1,
**caractérisé en ce que** :
le thermosoudage est effectué par thermosoudage à rayon électronique.

4. Procédé selon la revendication 1, **caractérisé en ce que** l'énergie d'arc atteint au maximum 10 kJ/m lors du thermosoudage.

5. Procédé selon l'une quelconque des revendications 1 à 4, **caractérisé en ce que** la compression isostatique à température élevée est réalisé à une température entre 900 °C et 1 000 °C et à une pression entre 1 000 bars et 5 000 bars pendeant une période de temps entre 30 min et 300 min.

6. Procédé selon l'une quelconque des revendications précédentes,
**caractérisé en ce que**:
la pale de turbine à gaz est conçue sous la forme d'une aube mobile ou le segment de pale de turbine à gaz sous la forme d'un segment d'aube mobile ou la couronne de pales de turbine à gaz sous la forme d'une couronne d'aubes mobiles d'une turbine.

7. Procédé selon l'une quelconque des revendications précédentes, **caractérisé en ce que**, lors du thermosoudage et du soudage par diffusion, on utilise des pales de turbine à gaz et un adaptateur à contours d'extrémité précis.
